(19) Europäisches Patentamt / European Patent Office / Office européen des brevets

(11) **EP 4 439 724 A1**

(12) **EUROPEAN PATENT APPLICATION**
published in accordance with Art. 153(4) EPC

(43) Date of publication:
**02.10.2024 Bulletin 2024/40**

(21) Application number: **22898333.4**

(22) Date of filing: **28.10.2022**

(51) International Patent Classification (IPC):
**H01M 4/525** (2010.01)    **C01G 53/00** (2006.01)
**H01M 4/505** (2010.01)

(52) Cooperative Patent Classification (CPC):
**C01G 53/00; H01M 4/505; H01M 4/525;**
Y02E 60/10

(86) International application number:
**PCT/JP2022/040400**

(87) International publication number:
**WO 2023/095548 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.11.2021 JP 2021192201**

(71) Applicant: **Tanaka Chemical Corporation**
**Fukui-shi, Fukui 910-3131 (JP)**

(72) Inventors:
• **MAKIDA, Akari**
  **Fukui-shi, Fukui 910-3131 (JP)**
• **KOBAYASHI, Ryota**
  **Fukui-shi, Fukui 910-3131 (JP)**
• **TAKASHIMA, Masahiro**
  **Fukui-shi, Fukui 910-3131 (JP)**

(74) Representative: **Zacco GmbH**
**Bayerstrasse 83**
**80335 München (DE)**

(54) **TRANSITION METAL-CONTAINING HYDROXIDE, POSITIVE ELECTRODE ACTIVE MATERIAL OBTAINED USING TRANSITION METAL-CONTAINING HYDROXIDE AS PRECURSOR, AND METHOD FOR PRODUCING TRANSITION METAL-CONTAINING HYDROXIDE**

(57)    Provided is a transition metal-containing hydroxide that can give an excellent battery capacity to a secondary battery and can improve the cycle characteristics and safety of the secondary battery by preventing elution of an additive metal element that is a trace element contained in the transition metal-containing hydroxide when the transition metal-containing hydroxide is fired. A transition metal-containing hydroxide that is a precursor of a positive electrode active material for a non-aqueous electrolyte secondary battery, the transition metal-containing hydroxide comprising at least one major metal element selected from the group consisting of nickel (Ni), cobalt (Co), and manganese (Mn), and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), wherein a value A calculated by the following formula (1) is 3.00 J/g·°C or less:
$A = [S2 \times (X1 - B1)/X2 \times (S1 - B1)] \times S3 ... (1)$ wherein S1 represents a heat flow (unit: mW) at 125°C obtained by differential scanning calorimetry of a standard substance, X1 represents a heat flow (unit: mW) at 125°C obtained by differential scanning calorimetry of the transition metal-containing hydroxide, B1 represents a heat flow (unit: mW) at 125°C obtained by differential scanning calorimetry of a sample container used for differential scanning calorimetry, S2 represents a mass (unit: mg) of the standard substance used for differential scanning calorimetry, X2 represents a mass (unit: mg) of the transition metal-containing hydroxide used for differential scanning calorimetry, and S3 represents a specific heat capacity (unit: J/g·°C) of the standard substance.

Fig.1

**Description**

Technical Field

The present invention relates to a transition metal-containing hydroxide, a positive electrode active material using the transition metal-containing hydroxide as a precursor, and a method for producing the transition metal-containing hydroxide, and particularly to a transition metal-containing hydroxide that can give an excellent battery capacity to a secondary battery and improve the cycle characteristics and safety of the secondary battery by preventing elution due to phase transition or segregation of an additive metal element that is a trace element contained in the transition metal-containing hydroxide when the transition metal-containing hydroxide is fired, a positive electrode active material using the transition metal-containing hydroxide as a precursor, and a method for producing the transition metal-containing hydroxide.

Background Art

In recent years, a secondary battery has been used in a wide range of technical fields, such as a mobile device and a vehicle that use electricity or use electricity in combination as a power source, from the viewpoint of reducing an environmental load or the like. Examples of the secondary battery include a secondary battery using a non-aqueous electrolyte such as a lithium ion secondary battery. The secondary battery using a non-aqueous electrolyte such as a lithium ion secondary battery is suitable for miniaturization and weight reduction, and has characteristics such as a high utilization rate and high cycle characteristics.

A positive electrode active material for a lithium ion secondary battery is a fired product produced by mixing a transition metal-containing hydroxide as a precursor with a lithium compound and then firing the resulting mixture. In order to improve the battery capacity of a secondary battery, it is necessary to improve the reactivity between the transition metal-containing hydroxide and the lithium compound during the production of the positive electrode active material. Therefore, it is necessary to set the firing temperature of the mixture of the transition metal-containing hydroxide and the lithium compound to a predetermined temperature or higher.

However, when the mixture of the transition metal-containing hydroxide and the lithium compound is fired at a predetermined temperature or higher, the battery capacity of the secondary battery is improved, but an additive metal element that is a trace element contained in the transition metal-containing hydroxide may be eluted by phase transition or segregation. When the additive metal element is eluted from the transition metal-containing hydroxide, the dispersion state of the additive metal element in the positive electrode active material may become nonuniform to reduce the cycle characteristics of the secondary battery.

Therefore, it has been proposed to add a chelate compound such as hydroxycarboxylic acid to a metal aqueous solution in which aluminum and a further transition metal element that are additive metal elements are dissolved, to improve the solubility of aluminum in water, and then control the pH of the metal aqueous solution to thereby coprecipitate all of aluminum and the further transition metal in the same pH range to produce a transition metal-containing hydroxide (Patent Literature 1). According to Patent Literature 1, by using the above production method, a transition metal-containing hydroxide in which the dispersion state of aluminum is uniformized can be produced, and a positive electrode active material obtained by mixing the transition metal-containing hydroxide with a lithium compound and firing the resulting mixture has a uniformized dispersion state of aluminum and can impart excellent cycle characteristics to a lithium ion secondary battery.

However, in Patent Literature 1, when a mixture of a transition metal-containing hydroxide and a lithium compound is fired at a predetermined temperature or higher in order to improve the battery capacity of a secondary battery, aluminum may still be eluted by phase transition or segregation, and there is room for improvement in preventing the elution of an additive metal element such as aluminum from the transition metal-containing hydroxide and imparting excellent cycle characteristics to the secondary battery. In addition, there is the following problem: when the additive metal element such as aluminum is eluted from the transition metal-containing hydroxide, the crystal structure stability of the positive electrode active material and the battery structure stability may decrease, and the safety of the secondary battery may decrease.

When the firing temperature of the transition metal-containing hydroxide is set to a temperature lower than the predetermined temperature in order to prevent the segregation of the additive metal element in response to the above, it is possible to prevent the elution due to the segregation of the additive metal element, but there is the following problem: the battery capacity of the secondary battery decreases.

Document List

Patent Literature

Patent Literature 1: Japanese Patent Application Laid-Open No. 2021-018974

Summary of Invention

Technical Problem

In view of the above circumstances, an object of the present invention is to provide a transition metal-containing hydroxide that can give an excellent battery capacity to a secondary battery and improve the cycle characteristics and safety of the secondary battery by preventing elution due to phase transition or segregation of an additive metal element that is a trace element contained in the transition metal-containing hydroxide when the transition metal-containing hydroxide is fired, and a method for producing the transition metal-containing hydroxide.

Solution to Problem

The transition metal-containing hydroxide of the present invention prevents an additive metal element from being eluted by phase transition or segregation even if the transition metal-containing hydroxide is fired at a firing temperature that can give an excellent battery capacity, by controlling the heat capacity obtained by differential scanning calorimetry (abbreviated as DSC). In addition, the method for producing the transition metal-containing hydroxide according to the present invention can produce a transition metal-containing hydroxide having a controlled heat capacity obtained by differential scanning calorimetry, by controlling the temperature range of the reaction solution within a predetermined range and controlling the amount of a raw material solution added based on the volume of a reaction tank within a predetermined range.

The constitutions of the present invention are summarized as follows.

[1] A transition metal-containing hydroxide that is a precursor of a positive electrode active material for a non-aqueous electrolyte secondary battery, the transition metal-containing hydroxide comprising
at least one major metal element selected from the group consisting of nickel (Ni), cobalt (Co), and manganese (Mn), and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), wherein an A value calculated by the following formula (1) is 3.00 J/g·°C or less:

$$A = [S2 \times (X1 - B1)/X2 \times (S1 - B1)] \times S3 \dots (1)$$

wherein S1 represents a heat flow (unit: mW) at 125°C obtained by differential scanning calorimetry of a standard substance, X1 represents a heat flow (unit: mW) at 125°C obtained by differential scanning calorimetry of the transition metal-containing hydroxide, B1 represents a heat flow (unit: mW) at 125°C obtained by differential scanning calorimetry of a sample container used for differential scanning calorimetry, S2 represents a mass (unit: mg) of the standard substance used for differential scanning calorimetry, X2 represents a mass (unit: mg) of the transition metal-containing hydroxide used for differential scanning calorimetry, and S3 represents a specific heat capacity (unit: J/g·°C) of the standard substance.
[2] The transition metal-containing hydroxide according to [1], wherein the transition metal-containing hydroxide is represented by the following formula (2):

$$Ni_{1-x-y}M1_xM2_y(OH)_{2+a} \dots \qquad (2)$$

wherein M1 represents cobalt (Co) and/or manganese (Mn), M2 represents at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), $0 \leq x < 1.00$, $0 < y \leq 0.20$, $x + y \leq 1.00$, and a represents a numerical value satisfying a valence.
[3] The transition metal-containing hydroxide according to [1] or [2], wherein the transition metal-containing hydroxide has no maximum point of an endothermic peak in a range of 100°C or more to 125°C in a curve plotting the heat flow (unit: mW) on a vertical axis and a temperature (unit: °C) on a horizontal axis, obtained by differential scanning calorimetry of the transition metal-containing hydroxide.

[4] The transition metal-containing hydroxide according to [1] or [2], wherein a particle diameter (D50) at a cumulative volume percentage of 50% by volume is 5.0 $\mu$m or more and 15.0 $\mu$m or less.

[5] The transition metal-containing hydroxide according to [1] or [2], wherein a content of a $SO_4$ component is 0.60% by mass or less.

[6] The transition metal-containing hydroxide according to [1] or [2], wherein the transition metal-containing hydroxide comprises aluminum (Al) as the additive metal element.

[7] A positive electrode active material for a non-aqueous electrolyte secondary battery, wherein the transition metal-containing hydroxide according to [1] or [2] has been fired with a lithium compound.

[8] A method for producing a transition metal-containing hydroxide that is a precursor of a positive electrode active material for a non-aqueous electrolyte secondary battery, comprising

a crystallization step of adding and mixing a raw material solution comprising at least one major metal element selected from the group consisting of nickel (Ni), cobalt (Co), and manganese (Mn) and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), and a solution comprising a complexing agent in a reaction tank, and supplying a pH adjuster to a reaction solution in the reaction tank such that a pH of the reaction solution in the reaction tank based on a liquid temperature of 40°C is maintained in a range of 9 or more and 13 or less, thereby causing a coprecipitation reaction in the reaction solution to obtain a transition metal-containing hydroxide, wherein

a reaction temperature of the reaction solution in the crystallization step is 35°C or more and 75°C or less, and the raw material solution is added to the reaction tank at a value of [amount of the raw material solution added per unit time (unit: L/min)/volume of the reaction tank (unit: L)] $\times$ 100 that is 0.06 or more and 0.25 or less.

[9] A method for producing a transition metal-containing hydroxide according to [8], wherein the complexing agent is an ammonium ion donor, and an ammonium ion concentration of the reaction solution is 2.0 g/L or more and 15.0 g/L or less.

Effects of Invention

According to the transition metal-containing hydroxide of the present invention, it is possible to prevent segregation of the additive metal element included in the transition metal-containing hydroxide even if the transition metal-containing hydroxide is fired at a firing temperature that can give an excellent battery capacity, by controlling the A value calculated by formula (1): A = [S2 $\times$ (X1 - B1)/X2 $\times$ (S1 - B1)] $\times$ S3, wherein S1 represents a heat flow (unit: mW) at 125°C obtained by differential scanning calorimetry of a standard substance, X1 represents a heat flow (unit: mW) at 125°C obtained by differential scanning calorimetry of the transition metal-containing hydroxide, B1 represents a heat flow (unit: mW) at 125°C obtained by differential scanning calorimetry of a sample container used for differential scanning calorimetry, S2 represents a mass (unit: mg) of the standard substance used for differential scanning calorimetry, X2 represents a mass (unit: mg) of the transition metal-containing hydroxide used for differential scanning calorimetry, and S3 represents a specific heat capacity (unit: J/g·°C) of the standard substance, to 3.00 J/g·°C or less. Therefore, according to the transition metal-containing hydroxide of the present invention, it is possible to give an excellent battery capacity to a secondary battery and improve the cycle characteristics and safety of the secondary battery by preventing elution due to segregation of the additive metal element during firing.

According to the transition metal-containing hydroxide of the present invention, it is possible to more reliably prevent segregation of the additive metal element included in the transition metal-containing hydroxide even if the transition metal-containing hydroxide is fired at a firing temperature that can give an excellent battery capacity, by having no maximum point of an endothermic peak in the range of 100°C or more to 125°C in a curve plotting the heat flow (unit: mW) on the vertical axis and the temperature (unit: °C) on the horizontal axis, obtained by differential scanning calorimetry of the transition metal-containing hydroxide.

According to the transition metal-containing hydroxide of the present invention, a particle diameter (D50) at a cumulative volume percentage of 50% by volume that is 5.0 $\mu$m or more and 15.0 $\mu$m or less makes it easy to control the A value to 3.00 J/g·°C or less.

According to the transition metal-containing hydroxide of the present invention, a content of the $SO_4$ component that is 0.60% by mass or less can make it easy to optimize the reaction between the lithium compound and the transition metal-containing hydroxide during firing.

According to the method for producing a transition metal-containing hydroxide according to the present invention, it is possible to produce a transition metal-containing hydroxide in which the A value is controlled to 3.00 J/g·°C or less by setting the reaction temperature of the reaction solution in the crystallization step to 35°C or more and 75°C or less and adding the raw material solution to the reaction tank at a value of [amount of raw material solution added per unit time (unit: L/min)/volume of reaction tank (unit: L)] × 100 that is 0.06 or more and 0.25 or less.

According to the method for producing a transition metal-containing hydroxide according to the present invention, it is possible to more reliably produce a transition metal-containing hydroxide in which the A value is controlled to 3.00 J/g·°C or less, when the complexing agent used in the crystallization step is an ammonium ion donor, and the ammonium ion concentration of the reaction solution is 2.0 g/L or more and 15.0 g/L or less.

Brief Description of Drawing

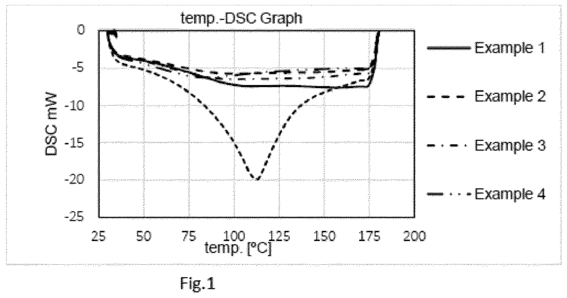

[Fig. 1] A graph plotting the heat flow (unit: mW) on the vertical axis and the temperature (unit: °C) on the horizontal axis, obtained by differential scanning calorimetry of transition metal-containing hydroxides of Examples and a Comparative Example.

Description of Embodiments

First, the details of the transition metal-containing hydroxide of the present invention will be described.

The transition metal-containing hydroxide of the present invention is secondary particles formed by aggregation of a plurality of primary particles, and the transition metal-containing hydroxide is an aggregate of a plurality of primary particles. The particle shapes of the transition metal-containing hydroxide of the present invention are not particularly limited, and are a wide variety of shapes, and examples thereof include an approximately spherical shape, an approximately elliptical shape as viewed in cross section, and a trapezoidal shape as viewed in cross section.

The composition of the transition metal-containing hydroxide of the present invention contains at least one major metal element that is a transition metal selected from the group consisting of nickel (Ni), cobalt (Co), and manganese (Mn), and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi). Specific examples of the composition of the transition metal-containing hydroxide of the present invention include a transition metal-containing hydroxide represented by the following formula (2):

$$Ni_{1-x-y}M1_xM2_y(OH)_{2+a} \ldots \qquad (2)$$

wherein M1 represents cobalt (Co) and/or manganese (Mn), M2 represents at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), $0 \leq x < 1.00$, $0 < y \leq 0.20$, $x + y \leq 1.00$, and a represents a numerical value satisfying a valence. Of these, the numerical range of x is more preferably $0 < x < 1.00$, and particularly preferably $0.02 \leq x \leq 0.30$, from the viewpoint of further improving the battery capacity. In addition, the numerical range of y is more preferably $0 < y \leq 0.10$, and particularly preferably $0.02 \leq y \leq 0.08$, from the viewpoint of further improving the battery capacity.

As a specific composition of the transition metal-containing hydroxide of the present invention, for example, in the above formula (2), the additive metal element M2 is preferably magnesium (Mg), zirconium (Zr), tungsten (W), copper (Cu), zinc (Zn), or aluminum (Al), and particularly preferably aluminum (Al).

In the transition metal-containing hydroxide of the present invention, the A value calculated by the following formula (1) is controlled to 3.00 J/g·°C or less:

$$A = [S2 \times (X1 - B1)/X2 \times (S1 - B1)] \times S3 \ldots (1)$$

wherein S1 represents a heat flow (unit: mW) at 125°C obtained by differential scanning calorimetry of a standard substance, X1 represents a heat flow (unit: mW) at 125°C obtained by differential scanning calorimetry of the transition metal-containing hydroxide, B1 represents a heat flow (unit: mW) at 125°C obtained by differential scanning calorimetry of a sample container used for differential scanning calorimetry, S2 represents a mass (unit: mg) of the standard substance used for differential scanning calorimetry, X2 represents a mass (unit: mg) of the transition metal-containing hydroxide used for differential scanning calorimetry, and S3 represents a specific heat capacity (unit: J/g·°C) of the standard substance. By controlling the A value calculated by the above formula (1) to 3.00 J/g·°C or less, it is possible to prevent segregation of the additive metal element included in the transition metal-containing hydroxide even if the transition metal-containing hydroxide is fired (for example, a mixture of the transition metal-containing hydroxide and a lithium compound is fired) at a firing temperature that can give an excellent battery capacity. Therefore, in a positive electrode active material obtained by firing the transition metal-containing hydroxide of the present invention, the elution due to segregation of the additive metal element is prevented, and thus a secondary battery equipped with the positive electrode active material can have an excellent battery capacity and obtain excellent cycle characteristics by prevention of the elution due to segregation of the additive metal element during firing. In addition, by prevention the elution due to segregation of the additive metal element during firing, reduction in the crystal structure stability of the positive electrode active material and the battery structure stability is prevented, and a secondary battery equipped with the positive electrode active material has excellent safety.

Usually, the transition metal-containing hydroxide is taken out in a suspension state from the reaction tank, and the suspension is subjected to drying treatment at 100°C to 125°C to obtain the transition metal-containing hydroxide, and when the A value calculated from the above formula (1) is low, water present inside the transition metal-containing hydroxide particles, which is water that cannot be completely evaporated by the drying treatment at such a usual drying temperature, is reduced. On the other hand, when the A value calculated from the above formula (1) is high, water present inside the transition metal-containing hydroxide particles, which is water that cannot be completely evaporated by the drying treatment at such a usual drying treatment temperature, is included in a large amount.

Usually, when manufacturing and firing a mixture of the transition metal-containing hydroxide and a lithium compound, the transition metal-containing hydroxide is subjected to oxidation treatment at a temperature of 300°C or more and 800°C or less in advance before adding the lithium compound, to prepare a transition metal-containing oxide. When the transition metal-containing hydroxide is subjected to oxidation treatment to prepare a transition metal-containing oxide, portions where water is present inside the transition metal-containing hydroxide particles become voids. When water present inside the transition metal-containing hydroxide particles is reduced, that is, when the A value is low, the voids inside the transition metal-containing oxide particles obtained by oxidation treatment are reduced, and thus it is considered that the reactivity between the transition metal-containing oxide prepared from the transition metal-containing hydroxide and the lithium compound is moderately suppressed, and as a result, it is possible to prevent segregation of the additive metal element during the firing of the transition metal-containing oxide prepared from the transition metal-containing hydroxide.

On the other hand, when the amount of water present inside the transition metal-containing hydroxide particles is large, that is, when the A value is high, there are many voids inside the transition metal-containing oxide particles obtained by oxidation treatment, and thus it is considered that the reactivity between the transition metal-containing oxide prepared from the transition metal-containing hydroxide and the lithium compound becomes higher than necessary, and as a result, the additive metal element in the transition metal-containing hydroxide segregates. From the above, it is considered that for the transition metal-containing hydroxide, by controlling the A value calculated from the above formula (1), it is possible to prevent segregation of the additive metal element included in the transition metal-containing hydroxide even if the transition metal-containing hydroxide and a lithium compound are fired at a firing temperature that can give an excellent battery capacity.

The firing temperature that can give an excellent battery capacity, for example, the temperature at which a lithium compound is reacted with the transition metal-containing hydroxide is a relatively high temperature range from the viewpoint of crystal growth, and examples thereof include temperatures of 600°C or more and 1000°C or less.

The A value calculated from the above formula (1) is not particularly limited as long as the A value is 3.00 J/g·°C or less, and the upper limit value thereof is preferably 2.50 J/g·°C and particularly preferably 2.20 J/g·°C, from the viewpoint of being able to more reliably prevent segregation of the additive metal element even if the transition metal-containing hydroxide is fired at a firing temperature that can give an excellent battery capacity (for example, a temperature of 600°C or more and 1000°C or less). On the other hand, the lower limit value of the A value calculated from the above formula (1) is preferably 1.00 J/g·°C, more preferably 1.30 J/g·°C, further preferably 1.50 J/g·°C, and particularly preferably 1.60 J/g·°C, from the viewpoint of preventing excessive suppression of the reactivity between the transition metal-containing hydroxide and a lithium compound. The upper limit values and the lower limit values described above can be combined arbitrarily.

The transition metal-containing hydroxide of the present invention preferably has no maximum point of an endothermic peak in the range of 100°C or more to 125°C in a DSC curve plotting the heat flow (unit: mW) on the vertical axis and the temperature (unit: °C) on the horizontal axis, obtained by differential scanning calorimetry of the transition metal-containing hydroxide, from the viewpoint of being able to more reliably prevent segregation of the additive metal element even if the transition metal-containing hydroxide is fired at a firing temperature that can give an excellent battery capacity.

The particle diameter of the transition metal-containing hydroxide of the present invention is not particularly limited, and for example, the lower limit value of the particle diameter at a cumulative volume percentage of 50% by volume (hereinafter sometimes simply referred to as "D50") is preferably 5.0 $\mu$m, more preferably 7.0 $\mu$m, and particularly preferably 10.0 $\mu$m, from the viewpoints of being able to make it easy to control the A value calculated from the formula (1) to 3.00 J/g·°C or less and improving the loading density of a positive electrode active material on the positive electrode. On the other hand, the upper limit value of D50 of the transition metal-containing hydroxide is preferably 15.0 $\mu$m and particularly preferably 13.0 $\mu$m, from the viewpoints of being able to make it easy to control the A value calculated from the above formula (1) to 3.00 J/g·°C or less and improving contact with an electrolyte. D50 described above means a particle diameter measured with a particle size distribution measuring apparatus by using a laser diffraction/scattering method. The upper limit values and the lower limit values described above can be combined arbitrarily.

As will be described later, for the transition metal-containing hydroxide of the present invention, an aqueous solution including metal ions obtained by dissolving a salt of a major metal and sulfuric acid and a salt of an additive metal and sulfuric acid in water may be used as a raw material solution. Therefore, the transition metal-containing hydroxide of the present invention may contain a sulfuric acid component ($SO_4$ component). The content of the $SO_4$ component in 100% by mass of the transition metal-containing hydroxide is not particularly limited, and the upper limit value thereof is preferably 0.60% by mass and particularly preferably 0.50% by mass, from the viewpoint of causing the reaction of a lithium compound to proceed efficiently. On the other hand, the lower the lower limit value of the content of the $SO_4$ component, the better, and, for example, the lower limit value is preferably 0.10% by mass and particularly preferably 0.15% by mass, from the viewpoint of industrial production cost. The upper limit values and the lower limit values described above can be combined arbitrarily.

Thereafter, the method for producing a transition metal-containing hydroxide according to the present invention will be described. The method for producing a transition metal-containing hydroxide according to the present invention includes a crystallization step. The crystallization step is a step of adding and mixing a solution (raw material solution) including a salt of a major metal element that is at least one transition metal selected from the group consisting of nickel (Ni), cobalt (Co), and manganese (Mn) and a salt of at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), and a solution including a complexing agent in a reaction tank, and supplying a pH adjuster to a reaction solution in the reaction tank such that the pH of the reaction solution in the reaction tank based on a liquid temperature of 40°C is maintained, for example in the range of 9 or more and 13 or less and preferably in the range of pH 11 to 13, thereby causing a coprecipitation reaction between the major metal element and the additive metal element in the reaction solution by neutralization crystallization to obtain transition metal-containing hydroxide particles. In the crystallization step, the temperature range of the reaction solution in the reaction tank is controlled in a predetermined range while controlling the amount of the raw material solution added per unit time based on the volume of the reaction tank in a predetermined range, and thereby it is possible to produce the transition metal-containing hydroxide of the present invention in which the A value calculated from the above formula (1) is controlled to 3.00 J/g·°C or less. Therefore, in producing the transition metal-containing hydroxide of the present invention, there is no need to use a special component other than the substances conventionally used.

Specifically, by a coprecipitation reaction, a solution including a complexing agent and a pH adjuster are appropriately added to a solution (raw material solution) including a salt (for example, sulfate) of at least one major metal element selected from the group consisting of nickel (Ni), cobalt (Co), and manganese (Mn) and a salt (for example, sulfate) of at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), and the mixed solution (reaction solution) in a reaction tank is appropriately stirred to cause a neutralization reaction and crystallization in the reaction tank, thereby preparing transition metal-containing hydroxide particles to obtain a slurry-like suspension including the transition metal-containing hydroxide particles. Examples of a solvent for the suspension include water. Therefore, examples of the raw material solution include an aqueous solution including a salt of a major metal element and a salt of an additive metal element. In addition, examples of the solution including a complexing agent include an aqueous solution of a complexing agent.

The complexing agent is not particularly limited as long as the complexing agent can form a complex with an ion of a major metal element and an ion of an additive metal element in an aqueous solution, and examples thereof include an ammonium ion donor, hydrazine, ethylenediaminetetraacetic acid, nitrilotriacetic acid, uracil diacetic acid, and glycine. In addition, examples of the ammonium ion donor include ammonium sulfate, ammonium chloride, ammonium carbonate, and ammonium fluoride.

During the coprecipitation reaction, a pH adjuster is appropriately added as described above in order to adjust the pH value of the aqueous solution that is the reaction solution. Examples of the pH adjuster include an alkali metal hydroxide (for example, sodium hydroxide or potassium hydroxide).

During the coprecipitation reaction, as described above, the temperature range of the reaction solution in the reaction tank is controlled in a predetermined range while controlling the amount of the raw material solution added per unit time based on the volume of the reaction tank in a predetermined range. Specifically, for the proportion of the amount B of the raw material solution added per unit time (L/min) to the volume V (L) of the reaction tank, the raw material solution is added to the reaction tank such that the value of [amount B added (L/min)/reaction tank volume V (L)] × 100 is in the range of 0.06 or more and 0.25 or less. By controlling the value of [amount B added (L/min)/reaction tank volume V (L)] × 100 in the range of 0.06 or more and 0.25 or less, moderate control of the crystal growth rate during the coprecipitation reaction can contribute to controlling the A value calculated from the above formula (1) to 3.00 J/g·°C or less.

In addition, the temperature of the reaction solution is adjusted to be in the range of 35°C or more and 75°C or less. By setting the temperature of the reaction solution in the range of 35°C or more and 75°C or less, moderate control of the crystal growth rate during the coprecipitation reaction provides a crystal growth rate suitable for suppressing voids inside the transition metal-containing hydroxide and can contribute to controlling the A value calculated from the above formula (1) to 3.00 J/g·°C or less.

From the above, by controlling the value of [amount B added (L/min)/reaction tank volume V (L)] × 100 and the temperature of the reaction solution in the above ranges, it is possible to produce a transition metal-containing hydroxide in which the value A is controlled to 3.00 J/g·°C or less.

Here, the upper limit value of the value of [amount B added (L/min)/reaction tank volume V (L)] × 100 is preferably 0.25, more preferably 0.22, further preferably 0.20, and particularly preferably 0.18, from the viewpoint of more reliably controlling the A value calculated from the above formula (1) to 3.00 J/g·°C or less. On the other hand, the upper limit value of the value of [amount B added (L/min)/reaction tank volume V (L)] × 100 is preferably 0.06 and particularly preferably 0.07, from the viewpoint of more reliably controlling the specific heat capacity represented by the A value calculated from the above formula (1) to 3.00 J/g·°C or less. The upper limit values and the lower limit values described above can be combined arbitrarily.

In addition, the upper limit value of the temperature of the reaction solution is preferably 75°C, more preferably 70°C, further preferably 60°C, and particularly preferably 55°C, from the viewpoint of more reliably control the A value calculated from the above formula (1) to 3.00 J/g·°C or less. On the other hand, the lower limit value of the temperature of the reaction solution is preferably 35°C, more preferably 37°C, and particularly preferably 40°C, from the viewpoint of more reliably control the A value calculated from the above formula (1) to 3.00 J/g·°C or less. The upper limit values and the lower limit values described above can be combined arbitrarily.

In addition, when an ammonium ion donor is used as the complexing agent, the ammonium ion donor is preferably added to the reaction tank from a supply section different from a supply section for the raw material solution. That is, it is preferable to provide the reaction tank with a supply section for the raw material solution and a supply section for the ammonium ion donor different from the supply section for the raw material solution. In addition, when an ammonium ion donor is used, the ammonium ion concentration of the reaction solution is not particularly limited, and the upper limit value of the ammonium ion concentration of the reaction solution is preferably 15.0 g/L, more preferably 14.7 g/L, and particularly preferably 14.4 g/L, from the viewpoint of more reliably controlling the A value calculated from the above formula (1) to 3.00 J/g·°C or less. On the other hand, the lower limit value of the ammonium ion concentration of the reaction solution is not particularly limited, and is preferably 2.0 g/L, more preferably 4.0 g/L, further preferably 5.0 g/L, and particularly preferably 6.0 g/L, from the viewpoint of more reliably controlling the A value calculated from the above formula (1) to 3.00 J/g·°C or less. The upper limit values and the lower limit values described above can be combined arbitrarily. In addition, the reaction atmosphere in the reaction tank is preferably an inert atmosphere, and for example, preferably a nitrogen atmosphere.

Examples of a stirring apparatus installed in the reaction tank include a stirrer equipped with a stirring blade such as three blades, and as a stirring condition, the rotational speed of the stirring blades or the like may be appropriately adjusted in a predetermined range.

Examples of the reaction tank used in the method for producing a transition metal-containing hydroxide according to the present invention include a continuous type reaction tank in which the obtained transition metal-containing hydroxide is caused to overflow from an overflow pipe in order to separate the transition metal-containing hydroxide from the reaction tank, and a batch type reaction tank in which the transition metal-containing hydroxide is not discharged out of the system until completion of the reaction.

As described above, the transition metal-containing hydroxide particles obtained in the crystallization step are filtered from the suspension, and then washed with an alkaline aqueous solution to remove an impurity (for example, $SO_4$ component) included in the transition metal-containing hydroxide particles. After that, the solid phase and the liquid phase are separated in a solid-liquid separation step, the solid phase including the transition metal-containing hydroxide is washed with water, the transition metal-containing hydroxide is subjected to heat treatment at a temperature of about 100°C to 130°C, and thereby a powdery transition metal-containing hydroxide can be obtained.

The transition metal-containing hydroxide of the present invention can be used as a precursor of a positive electrode active material for a non-aqueous electrolyte secondary battery. Hereinafter, the positive electrode active material for a non-aqueous electrolyte secondary battery using the transition metal-containing hydroxide of the present invention as a precursor (hereinafter sometimes simply referred to as the "positive electrode active material") will be described. The positive electrode active material is in an aspect in which the transition metal-containing hydroxide of the present invention, which is a precursor, has been fired in a state mixed with, for example, a lithium compound. The crystal structure of the positive electrode active material is a layered structure, and is preferably a trigonal crystal structure, a hexagonal crystal structure, or a monoclinic crystal structure, from the viewpoint of obtaining a secondary battery having a high discharge capacity.

The positive electrode active material using the transition metal-containing hydroxide as a precursor can be used, for example, as a positive electrode active material for a non-aqueous electrolyte secondary battery such as a lithium ion secondary battery.

When the positive electrode active material is produced, a step of preparing the transition metal-containing hydroxide into a transition metal-containing oxide may be carried out as a pretreatment for firing, to use the transition metal-containing oxide as a precursor. Examples of a method for preparing a transition metal-containing oxide from the transition metal-containing hydroxide include oxidation treatment involving heating the transition metal-containing hydroxide in an atmosphere in which oxygen gas is present, at, for example, a temperature of 300°C or more and 800°C or less and preferably a temperature of 500°C or more and 750°C or less for 1 hour or more and 10 hours or less before adding a lithium compound.

Thereafter, a method for producing a positive electrode active material will be described. For example, in the method for producing a positive electrode active material, first, a lithium compound is added to the transition metal-containing hydroxide (or a transition metal-containing oxide obtained by carrying out a pretreatment) and mixed to prepare a mixture of the transition metal-containing hydroxide (or the transition metal-containing oxide) and the lithium compound. The lithium compound is not particularly limited as long as the lithium compound is a compound having lithium, and examples thereof include lithium carbonate, lithium hydroxide, lithium nitrate, lithium acetate, lithium oxalate, and lithium halide. In addition, the amount of the lithium compound blended can be appropriately selected so as to obtain a positive electrode active material having a desired lithium composition.

Thereafter, a positive electrode active material can be produced by firing the mixture. Examples of a condition for a firing step include a firing temperature at which the battery capacity of a non-aqueous electrolyte secondary battery is improved, for example, a firing temperature of 600°C or more and 1000°C or less. In addition, the full width at half maximum on the (104) plane analyzed from an X-ray diffraction pattern of the positive electrode active material obtained by firing (that is, a fired product of the transition metal-containing hydroxide of the present invention and the lithium compound) is controlled within a predetermined range when the above mixture is fired at a firing temperature at which the battery capacity of a non-aqueous electrolyte secondary battery is improved. In a composition in which the transition metal-containing hydroxide contains at least one major metal element selected from the group consisting of nickel (Ni), cobalt (Co), and manganese (Mn), and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), for example, a composition in which the transition metal-containing hydroxide contains nickel (Ni), cobalt (Co), and aluminum (Al), when the full width at half maximum on the (104) plane analyzed from an X-ray diffraction pattern of the positive electrode active material obtained by firing is within the range of 0.220° or more and 0.250° or less, the above mixture is fired at a firing temperature at which the battery capacity of a non-aqueous electrolyte secondary battery is improved (for example, a firing temperature of 600°C or more and 1000°C or less). Within the above range of the full width at half maximum on the (104) plane, the range of 0.230° or more and 0.240° or less is preferable from the viewpoint of providing a firing temperature at which the battery capacity of a non-aqueous electrolyte secondary battery is further improved.

In addition, examples of the condition for the firing step include a temperature increase rate of 50°C/h or more and 300°C/h or less, and a firing time of 5 hours or more and 20 hours or less. The firing atmosphere is not particularly limited, and examples thereof include the air and oxygen. In addition, the firing furnace used for firing is not particularly limited, and examples thereof include a stationary box furnace and a roller hearth continuous furnace.

The transition metal-containing hydroxide of the present invention can prevent the elution due to phase transition or segregation of the additive metal element that is a trace element contained in the transition metal-containing hydroxide when fired at a firing temperature at which the battery capacity is improved, and thus the dispersion state of the additive metal element in the positive electrode active material is uniformized, and thus excellent cycle characteristics can also be imparted to a non-aqueous electrolyte secondary battery. In addition, the transition metal-containing hydroxide of the present invention can prevent the elution due to segregation of the additive metal element when fired at a firing temperature at which the battery capacity is improved, and thus the crystal structure of the positive electrode active material is stabilized, and excellent safety can also be imparted to a non-aqueous electrolyte secondary battery.

Examples

Thereafter, Examples of the transition metal-containing hydroxide of the present invention will be described, but the present invention is not limited to these examples as long as the scope of the present invention is not exceeded.

Production of transition metal-containing hydroxides of Examples and Comparative Example

Production of transition metal-containing hydroxide of Example 1

A raw material solution (aqueous solution including major metal elements and an additive metal element) that was an aqueous solution of nickel sulfate, cobalt sulfate, and aluminum sulfate dissolved at a nickel: cobalt: aluminum molar ratio of 91.0:4.0:5.0, an ammonium sulfate aqueous solution (ammonium ion donor), and a sodium hydroxide aqueous solution (pH adjuster) were added dropwise to a continuous reaction tank to carry out a crystallization step. In the crystallization step, the raw material solution was added dropwise to the reaction tank such that the value of [amount B of raw material solution added per unit time (L/min)/reaction tank volume V (L)] × 100 was 0.18, and then, while maintaining the liquid temperature of the mixed solution in the reaction tank at 45°C and maintaining the pH of the mixed liquid in the reaction tank at 12.22 based on a liquid temperature of 40°C and the ammonia concentration at 11.0 g/L, the mixed solution was continuously stirred by using a stirrer equipped with a stirring blade. The inside of the reaction tank was a nitrogen atmosphere. The transition metal-containing hydroxide particles crystallized by neutralization reaction were caused to overflow from an overflow pipe of the reaction tank and taken out as a suspension of the transition metal-containing hydroxide particles. As described above, the suspension of the transition metal-containing hydroxide particles taken out by overflow was filtered and then washed with an alkali aqueous solution (8% by mass sodium hydroxide aqueous solution) and subjected to solid-liquid separation. After that, the separated solid phase was washed with water, further dehydrated, and subjected to drying treatment at 100°C to 130°C to obtain a powdery transition metal-containing hydroxide.

Production of transition metal-containing hydroxide of Example 2

A transition metal-containing hydroxide was produced in the same manner as in Example 1, except that a raw material solution in which the molar ratio of nickel:cobalt:aluminum was changed to 87.0:9.0:4.0 was used, the raw material solution was added dropwise to the reaction tank such that the value of [amount B of raw material solution added per unit time (L/min)/reaction tank volume V (L)] × 100 was 0.07, the liquid temperature of the mixed solution in the reaction tank was maintained at 40°C, the pH of the mixed liquid in the reaction tank was maintained at 12.03 based on a liquid temperature of 40°C, and the ammonia concentration was maintained at 7.5 g/L.

Production of transition metal-containing hydroxide of Example 3

A transition metal-containing hydroxide was produced in the same manner as in Example 1, except that the raw material solution was added dropwise to the reaction tank such that the value of [amount B of raw material solution added per unit time (L/min)/reaction tank volume V (L)] × 100 was 0.15, the liquid temperature of the mixed solution in the reaction tank was maintained at 50°C, the pH of the mixed liquid in the reaction tank was maintained at 12.15 based on a liquid temperature of 40°C, and the ammonia concentration was maintained at 11.7 g/L.

Production of transition metal-containing hydroxide of Example 4

A transition metal-containing hydroxide was produced in the same manner as in Example 1, except that the raw material solution was added dropwise to the reaction tank such that the value of [amount B of raw material solution added per unit time (L/min)/reaction tank volume V (L)] × 100 was 0.07, the liquid temperature of the mixed solution in the reaction tank was maintained at 40°C, the pH of the mixed liquid in the reaction tank was maintained at 12.49 based on a liquid temperature of 40°C, and the ammonia concentration was maintained at 14.2 g/L.

Production of transition metal-containing hydroxide of Comparative Example 1

A transition metal-containing hydroxide was produced in the same manner as in Example 1, except that the liquid temperature of the mixed solution in the reaction tank was maintained at 30°C, the pH of the mixed liquid in the reaction tank was 12.41 based on a liquid temperature of 40°C, and the ammonia concentration was maintained at 10.7 g/L.

Evaluation items for the physical properties of the transition metal-containing hydroxides of the Examples and the Comparative Example are as follows.

(1) Average particle diameter (D50)

The measurement was carried out with a particle size distribution measuring apparatus (LA-920, manufactured by HORIBA, Ltd.) (the principle is a laser diffraction/scattering method). The measurement conditions were as follows: water was used as a solvent, 1 mL of sodium hexametaphosphate was placed as a dispersant, the transmittance after a sample was placed was in the range of 85 ± 3%, and an ultrasonic wave was generated to disperse the sample. In addition, 1.333, which is the refractive index of water, was used as the refractive index of the solvent during the analysis.

(2) Content of $SO_4$ component

The obtained transition metal-containing hydroxide was dissolved in hydrochloric acid, and then the content of the S component was measured by using an inductively coupled plasma emission spectrometer (Optima 7300DV, manufactured by PerkinElmer Japan Co., Ltd.). The content of the S component obtained by the measurement was converted into that in terms of the $SO_4$ component to calculate the content of the $SO_4$ component in the transition metal-containing hydroxide.

(3) Heat flow at 125°C obtained by differential scanning calorimetry

As a differential scanning calorimeter, "Differential Scanning Calorimeter DSC6220" manufactured by SII Nano Technology Inc. was used to measure the heat flow of the sample container of the differential scanning calorimeter and 20 mg of each of the transition metal-containing hydroxides (corresponding to X2 in formula (1)) of the Examples and the Comparative Example placed in an aluminum (Al) sample container in a nitrogen atmosphere with the following measurement program. From the results thereof, each DSC curve plotting the heat flow (unit: mW) on the vertical axis and the temperature (unit: °C) on the horizontal axis was created. From the obtained DSC curve, the heat flow (corresponding to X1 in formula (1)) of the transition metal-containing hydroxide at 125°C and the heat flow of the sample container at 125°C (corresponding to B1 in formula (1)) were determined. In addition, regarding the standard substance, 20 mg of $\alpha$-alumina, which was a standard substance, was placed in a sample container (corresponding to S2 in formula (1)), and a DSC curve plotting the heat flow (unit: mW) on the vertical axis and the temperature (unit: °C) on the horizontal axis was created. From the obtained DSC curve, the heat flow of the standard substance at 125°C (S1 in formula (1) was determined. A value of 0.930 J/g·°C was used as the specific heat capacity of the standard substance (corresponding to S3 in formula (1)). The standard substance is not particularly limited as long as the standard substance is a known substance used for DSC measurement, and examples thereof include $\alpha$-alumina and sapphire.

<Measurement program>

1. Keep warm at 30°C for 5 minutes
2. Increase the temperature from 30°C to 180°C at 10°C/min
3. Keep warm at 180°C for 5 minutes

The measurement results of the heat flow at 125°C of the transition metal-containing hydroxides of the Examples and the Comparative Example, the standard substance, and the sample container were used to calculate the A values according to formula (1) represented by A = [S2 × (X1 - B1)/X2 × (S1 - B1)] × S3.

The conditions of the crystallization step of the transition metal-containing hydroxides of the Examples and the Comparative Example and the evaluation results of physical properties thereof are shown in Table 1 below.

[Table 1]

|  |  | Unit | Example 1 | Example 2 | Example 3 | Example 4 | Comparative Example 1 |
|---|---|---|---|---|---|---|---|
| Production conditions | [Amount B of raw material solution added/reaction tank volume V] ×100 | [L/min] /L | 0,18 | 0,07 | 0,15 | 0,07 | 0,18 |
|  | Reaction temperature | °C | 45 | 40 | 50 | 40 | 30 |
|  | Ammonia concentration | g/L | 11,0 | 7,5 | 11,7 | 14,2 | 10,7 |
| Composition | Nickel | mol% | 91,0 | 87,0 | 91,0 | 91,0 | 91,0 |
|  | Cobalt | mol% | 4,0 | 9,0 | 4,0 | 4,0 | 4,0 |
|  | Aluminum | mol% | 5,0 | 4,0 | 5,0 | 5,0 | 5,0 |
| Physical properties | D50 | μm | 11,6 | 11,0 | 11,5 | 12,3 | 11,3 |
|  | $SO_4$ | wt% | 0,21 | 0,21 | 0,32 | 0,46 | 0,14 |
|  | A value calculated from formula (1) | J/g·°C | 2,16 | 1,69 | 1,94 | 1,59 | 4,09 |
|  | Presence or absence of maximum point of endothermic peak at 100 to 125°C in DSC curve | - | Absent | Absent | Absent | Absent | Present |

Production of positive electrode active materials using transition metal-containing hydroxides of Examples and Comparative Example

The transition metal-containing hydroxides of the Examples and the transition metal-containing hydroxide of the Comparative Example were each subjected in advance to an oxidation treatment step of subjecting the transition metal-containing hydroxide to oxidation treatment to prepare a transition metal-containing oxide, as a pretreatment of firing. As the oxidation treatment, each of the transition metal-containing hydroxide was heated at a temperature of 550°C for 3 hours in an air atmosphere. After that, a lithium hydroxide powder was added to the transition metal-containing oxide such that the molar ratio of Li/(Ni + Co + Al) was 1.02 and mixed to obtain a mixture of the transition metal-containing oxide and the lithium hydroxide. The obtained mixture was subjected to firing treatment in an oxygen atmosphere under firing conditions of a firing temperature of 750°C, a temperature increase rate of 170°C/h, and a firing time of 6 hours to obtain a positive electrode active material.

Evaluation items for the positive electrode active materials obtained from the transition metal-containing hydroxides of the Examples and the Comparative Example are as follows.

(4) Segregation state of aluminum

The segregation state of aluminum in the positive electrode active material was observed by using an EDS-equipped scanning electron microscope SEM-EDS JSM-IT1500 (manufactured by JEOL Ltd.) and evaluated according to the following criteria.

Excellent: No segregation whatsoever of aluminum is observed.
Good: Almost no segregation of aluminum is observed.
Fair: Some segregation of aluminum is observed.
Poor: Much segregation of aluminum is observed.

(5) Full width at half maximum on (104) plane

In a powder X-ray diffraction measurement using CuKα radiation, the full width at half maximum of a diffraction peak appearing in the range of 2Θ = 44.5 ± 1 was measured. Specifically, the powder X-ray diffraction measurement was carried out by using an X-ray diffractometer (Ultima IV, manufactured by Rigaku Corporation). A powder of the positive electrode active material was loaded onto a dedicated substrate, and the measurement was carried out by using a CuKα radiation source (40 kV/40 mA) under conditions of a diffraction angle of 2θ = 0° to 100°, a sampling width of 0.03°, and a scan speed of 20°/min to obtain a powder X-ray diffraction pattern. The obtained powder X-ray diffraction pattern was subjected to smoothing processing and background subtraction processing by using integral intensity calculation software, and the full width at half maximum of a diffraction peak appearing in the range of 2θ = 44.5 ± 1 was calculated from the powder X-ray diffraction pattern. The full width at half maximum of a diffraction peak appearing in the range of 2θ = 44.5 ± 1 was evaluated according to the following criteria.

Good: 0.230° or more and 0.240° or less

Fair: 0.220° or more and less than 0.230°, or more than 0.240° and 0.250° or less

Poor: less than 0.220° or more than 0.250°

The evaluation results of the positive electrode active materials obtained from the transition metal-containing hydroxides of the Examples and the Comparative Example are shown in Table 2 below.

[Table 2]

| | | Unit | Example 1 | Example 2 | Example 3 | Example 4 | Comparative Example 1 |
|---|---|---|---|---|---|---|---|
| Evaluation items for positive electrode active material | Full width at half maximum on (104) plane | ○ | 0,239 | 0,232 | 0,239 | 0,243 | 0,222 |
| | | - | Good | Good | Good | Fair | Fair |
| | Segregation state of aluminum | - | Fair | Good | Good | Excellent | Poor |

According to Tables 1 and 2 above, in the transition metal-containing hydroxides of Examples 1 to 4 in which the A value calculated by formula (1) was 3.00 J/g·°C or less, segregation of aluminum was prevented even when fired at 750°C, which was a firing temperature at which the battery capacity was improved, to produce a positive electrode active material, and it has been found that excellent cycle characteristics can also be imparted to a non-aqueous electrolyte secondary battery assembled with the positive electrode active material using any of the transition metal-containing hydroxides of Examples 1 to 4 as a precursor. In addition, in the positive electrode active materials using the transition metal-containing hydroxides of Examples 1 to 4 as precursors, the full width at half maximum on the (104) plane was in the range of 0.220° to 0.250°, and it has been demonstrated that the firing temperature of 750°C is the firing temperature at which the battery capacity of the non-aqueous electrolyte secondary battery assembled with the positive electrode active material using any of the transition metal-containing hydroxides of Examples 1 to 4 as a precursor is improved. In addition, the transition metal-containing hydroxides of Examples 1 to 4 can prevent segregation of the additive metal element when fired at a firing temperature at which the battery capacity is improved, and thus it has been found that excellent safety can also be imparted to the non-aqueous electrolyte secondary battery.

In particular, in any of the transition metal-containing hydroxides of Examples 2 to 4 in which the A value calculated by formula (1) was 1.94 J/g·°C or less, even when a positive electrode active material was produced by firing the transition metal-containing hydroxide at 750°C at which the battery capacity of the non-aqueous electrolyte secondary battery was improved and the full width at half maximum on the (104) plane of the positive electrode active material was in the range of 0.220° to 0.250°, almost no segregation of aluminum was observed or no segregation whatsoever of aluminum was observed, and thus it has been found that an excellent battery capacity, cycle characteristics, and safety can be imparted more reliably. In addition, in Example 2 in which the specific heat capacity represented by the A value calculated by formula (1) was 1.69 J/g·°C, and Example 3 in which the specific heat capacity represented by the A value calculated by formula (1) was 1.94 J/g·°C, not only was almost no segregation of aluminum observed, but also the full width at half maximum on the (104) plane of the positive electrode active material was rated as Good, and it has been found that the battery capacity of the non-aqueous electrolyte secondary battery is also further improved. In addition, as shown in Fig. 1, the transition metal-containing hydroxides of Examples 1 to 4 had no maximum point of an endothermic peak in the range of 100°C or more to 125°C in the DSC curves. Fig. 1 shows DSC curves plotting the heat flow (unit: mW) on the vertical axis and the temperature (unit: °C) on the horizontal axis, obtained by differential scanning calorimetry of the transition metal-containing hydroxides of the Examples and the Comparative Example.

On the other hand, in the transition metal-containing hydroxide of Comparative Example 1 in which the A value calculated by formula (1) was 4.09 J/g·°C, when a positive electrode active material was produced by firing the transition metal-containing hydroxide at 750°C at which the battery capacity of the non-aqueous electrolyte secondary battery was improved and the full width at half maximum on the (104) plane of the material was 0.222°, much segregation of aluminum was observed, and it has been found that even if the battery capacity is excellent, the cycle characteristics and safety of the non-aqueous electrolyte secondary battery may decrease. In addition, as shown in Fig. 1, the transition metal-containing hydroxide of Comparative Example 1 had a maximum point of an endothermic peak in the range of 100°C or more to 125°C in the DSC curve.

Industrial Applicability

The transition metal-containing hydroxide of the present invention in which the A value is controlled can give an excellent battery capacity to a secondary battery and also improve the cycle characteristics and safety of the secondary battery by preventing elution due to segregation of the additive metal element contained in the transition metal-containing hydroxide when the transition metal-containing hydroxide is fired, and thus the transition metal-containing hydroxide is particularly highly useful in the field of a lithium ion secondary battery installed in a high-performance device.

**Claims**

1. A transition metal-containing hydroxide that is a precursor of a positive electrode active material for a non-aqueous electrolyte secondary battery, the transition metal-containing hydroxide comprising

   at least one major metal element selected from the group consisting of nickel (Ni), cobalt (Co), and manganese (Mn), and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), wherein
   a value A calculated by the following formula (1) is 3.00 J/g·°C or less:

$$A = [S2 \times (X1 - B1)/X2 \times (S1 - B1)] \times S3 \dots (1)$$

   wherein S1 represents a heat flow (unit: mW) at 125°C obtained by differential scanning calorimetry of a standard substance, X1 represents a heat flow (unit: mW) at 125°C obtained by differential scanning calorimetry of the transition metal-containing hydroxide, B1 represents a heat flow (unit: mW) at 125°C obtained by differential scanning calorimetry of a sample container used for differential scanning calorimetry, S2 represents a mass (unit: mg) of the standard substance used for differential scanning calorimetry, X2 represents a mass (unit: mg) of the transition metal-containing hydroxide used for differential scanning calorimetry, and S3 represents a specific heat capacity (unit: J/g·°C) of the standard substance.

2. The transition metal-containing hydroxide according to claim 1, wherein the transition metal-containing hydroxide is represented by the following formula (2):

$$Ni_{1-x-y}M1_xM2_y(OH)_{2+a} \dots \qquad (2)$$

   wherein M1 represents cobalt (Co) and/or manganese (Mn), M2 represents at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), $0 \leq x < 1.00$, $0 < y \leq 0.20$, $x + y \leq 1.00$, and a represents a numerical value satisfying a valence.

3. The transition metal-containing hydroxide according to claim 1 or 2, wherein the transition metal-containing hydroxide has no maximum point of an endothermic peak in a range of 100°C or more to 125°C in a curve plotting the heat flow (unit: mW) on a vertical axis and a temperature (unit: °C) on a horizontal axis, obtained by differential scanning calorimetry of the transition metal-containing hydroxide.

4. The transition metal-containing hydroxide according to claim 1 or 2, wherein a particle diameter (D50) at a cumulative volume percentage of 50% by volume is 5.0 $\mu$m or more and 15.0 $\mu$m or less.

5. The transition metal-containing hydroxide according to claim 1 or 2, wherein a content of a $SO_4$ component is 0.60% by mass or less.

6. The transition metal-containing hydroxide according to claim 1 or 2, wherein the transition metal-containing hydroxide comprises aluminum (Al) as the additive metal element.

7. A positive electrode active material for a non-aqueous electrolyte secondary battery, wherein the transition metal-containing hydroxide according to claim 1 or 2 has been fired with a lithium compound.

8. A method for producing a transition metal-containing hydroxide that is a precursor of a positive electrode active material for a non-aqueous electrolyte secondary battery, comprising

a crystallization step of adding and mixing a raw material solution comprising at least one major metal element selected from the group consisting of nickel (Ni), cobalt (Co), and manganese (Mn) and at least one additive metal element selected from the group consisting of magnesium (Mg), calcium (Ca), strontium (Sr), barium (Ba), titanium (Ti), zirconium (Zr), vanadium (V), niobium (Nb), chromium (Cr), molybdenum (Mo), tungsten (W), iron (Fe), ruthenium (Ru), copper (Cu), zinc (Zn), boron (B), aluminum (Al), gallium (Ga), silicon (Si), tin (Sn), phosphorus (P), and bismuth (Bi), and a solution comprising a complexing agent in a reaction tank, and supplying a pH adjuster to a reaction solution in the reaction tank such that a pH of the reaction solution in the reaction tank based on a liquid temperature of 40°C is maintained in a range of 9 or more and 13 or less, thereby causing a coprecipitation reaction in the reaction solution to obtain a transition metal-containing hydroxide, wherein
a reaction temperature of the reaction solution in the crystallization step is 35°C or more and 75°C or less, and the raw material solution is added to the reaction tank at a value of [amount of the raw material solution added per unit time (unit: L/min)/volume of the reaction tank (unit: L)] $\times$ 100 that is 0.06 or more and 0.25 or less.

9. The method for producing a transition metal-containing hydroxide according to claim 8, wherein the complexing agent is an ammonium ion donor, and an ammonium ion concentration of the reaction solution is 2.0 g/L or more and 15.0 g/L or less.

Fig.1

**INTERNATIONAL SEARCH REPORT**

International application No.

**PCT/JP2022/040400**

### A. CLASSIFICATION OF SUBJECT MATTER

*H01M 4/525*(2010.01)i; *C01G 53/00*(2006.01)i; *H01M 4/505*(2010.01)i
FI:   H01M4/525; C01G53/00 A; H01M4/505

According to International Patent Classification (IPC) or to both national classification and IPC

### B. FIELDS SEARCHED

Minimum documentation searched (classification system followed by classification symbols)

H01M4/525; C01G53/00; H01M4/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-089364 A (SUMITOMO METAL MINING CO., LTD.) 06 April 2006 (2006-04-06) paragraphs [0032], [0051]-[0054], table 1 | 1-9 |
| X | JP 6930015 B1 (SUMITOMO CHEMICAL CO., LTD.) 01 September 2021 (2021-09-01) paragraphs [0148], [0256]-[0262], [0264], [0271], table 1, example 3 | 1-9 |
| X | WO 2014/203814 A1 (SUMITOMO METAL MINING CO., LTD.) 24 December 2014 (2014-12-24) claim 1, paragraphs [0016], [0028], [0061], [0075]-[0079], example 1 | 1-9 |
| X | WO 2017/217367 A1 (SUMITOMO METAL MINING CO., LTD.) 21 December 2017 (2017-12-21) paragraphs [0001], [0047], [0083]-[0090], example 2 | 1-4, 6-9 |
| A | | 5 |
| A | JP 2021-024764 A (TANAKA CHEMICAL CORP.) 22 February 2021 (2021-02-22) paragraph [0044] | 1-9 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **15 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/040400**

| Patent document cited in search report | | | Publication date (day/month/year) | Patent family member(s) | Publication date (day/month/year) |
|---|---|---|---|---|---|
| JP | 2006-089364 | A | 06 April 2006 | (Family: none) | |
| JP | 6930015 | B1 | 01 September 2021 | WO 2022/107861 A1 paragraphs [0152], [0252]-[0258], [0260], [0267], table 1, example 3 | |
| WO | 2014/203814 | A1 | 24 December 2014 | US 2016/0133927 A1 claim 1, paragraphs [0019], [0039], [0074], [0101]-[0105], example 1<br>EP 3012889 A1<br>CN 105340112 A<br>KR 10-2016-0021112 A | |
| WO | 2017/217367 | A1 | 21 December 2017 | US 2019/0140278 A1 paragraphs [0001], [0057], [0116]-[0123], example 2<br>EP 3470376 A1<br>CN 109311699 A<br>KR 10-2019-0017786 A | |
| JP | 2021-024764 | A | 22 February 2021 | US 2022/0144664 A1 paragraph [0049]<br>WO 2021/025098 A1<br>EP 4011836 A1<br>CN 114206782 A<br>KR 10-2022-0043119 A | |

Form PCT/ISA/210 (patent family annex) (January 2015)

**EP 4 439 724 A1**

## REFERENCES CITED IN THE DESCRIPTION

**Patent documents cited in the description**

- JP 2021018974 A